# EUROPEAN PATENT SPECIFICATION

(11) **EP 4 109 284 B1**
(45) Date of publication and mention of the grant of the patent: **31.12.2025**
(21) Application number: 21757503.4
(22) Date of filing: 09.02.2021
(51) Int. Cl.: G06F 13/40

(54) **INTEGRATED INTERFACE CIRCUIT AND INTERFACE CIRCUIT MANUFACTURING METHOD**
INTEGRIERTE SCHNITTSTELLENSCHALTUNG UND VERFAHREN ZUR HERSTELLUNG EINER SCHNITTSTELLENSCHALTUNG
CIRCUIT D'INTERFACE INTÉGRÉ ET PROCÉDÉ DE FABRICATION DE CIRCUIT D'INTERFACE

(30) Priority: 20.02.2020 CN 202010104147
(43) Date of publication of application: 28.12.2022
(73) Proprietor: Bosch Automotive Products (Suzhou) Co., Ltd., Jiangsu 215021 (CN)
(72) Inventor: ZHANG, Haibo, Suzhou, Jiangsu 215021 (CN); ZHAN, Kang, Suzhou, Jiangsu 215021 (CN)
(74) Representative: Bee, Joachim
(86) International application number: PCT/CN2021/076175
(87) International publication number: WO 2021/164637

(56) References cited:
- WO-A1-2014/120452
- CN-A- 105 528 270
- CN-A- 106 454 185
- CN-A- 109 631 702
- CN-U- 208 689 571
- CN-U- 208 689 571
- CN-U- 208 689 571
- JP-B2- 3 956 527

## Description

### Technical Field

The present invention relates to an interface circuit design, and more specifically to an integrated interface circuit, to a method for manufacturing an interface circuit, to an electronic control unit, to a vehicle, and to a computer storage medium.

### Background Art

A processing unit in an existing electronic control unit (ECU) of an electric vehicle generally has a plurality of ports with different functions, such as an analogue-to-digital converter (ADC) port, an input pin port, an output pin port, and a ground port. Each functional port has a certain requirement for a specification of an input signal or an output signal, for example, an input voltage is required not to be higher than 4 V, etc.

If the external ports of the ECU are allocated by function (i.e., each external port corresponds to a single function), available external port resources of the ECU will be so tight that no more ports can be set for customized requirements.

JP 3956527 B2 aims to specify a device or a means under an abnormal condition by outputting a voltage signal to an external device by a voltage output means, and deciding abnormality by an abnormal decision means based on a condition signal outputted in response to a working condition and a voltage signal outputted from the voltage output means. To this end the document proposes an electronic control system for vehicles that comprises an electronic control unit (ECU) which outputs constant voltage for drive to decide abnormality, and an accelerator sensor outputting an opening signal corresponding to an accelerator opening to the ECU.

The ECU which conducts processing based on inputted information signal comprises a voltage outputting part outputting the constant voltage for drive to the accelerator sensor based on the control signal from a microcomputer outputting a command signal and a constant voltage control circuit, and a signal composing circuit incorporating the constant voltage supplied to the accelerator sensor from the voltage outputting part and outputting a composing voltage signal to the microcomputer. It is thus possible to determine the abnormal voltage outputting part on an abnormal condition.

CN 208689571 U discloses interface circuits for photoelectric direct reading modules, including a connector having four pins.

### Summary of the Invention

According to an aspect of the present invention, there is provided an integrated interface circuit according to independent claim 1.

Optionally, in the above integrated interface circuit, the plurality of functional interface circuits further include a third functional interface circuit corresponding to a third function, wherein circuit elements in the third functional interface circuit do not overlap the circuit elements in either the first functional interface circuit or the second functional interface circuit.

Optionally, in the above integrated interface circuit, the external port is an external input port for receiving an external input signal or an external output interface for transmitting a signal to the outside.

Optionally, in the above integrated interface circuit, the processor is a single-chip microcomputer.

Optionally, in the above integrated interface circuit, the third functional interface circuit includes: a first filtering element configured to filter an external input signal received from the external port; a voltage dividing element connected in series with the first filtering element and configured to reduce a voltage of the external input signal filtered by the first filtering element; and a voltage limiting element, wherein one end of the voltage limiting element is connected in series with the voltage dividing element and the other end of the voltage limiting element is connected in series with a corresponding terminal of the processor, and the voltage limiting element is configured to limit a voltage output to the corresponding terminal of the processor.

Optionally, in the above integrated interface circuit, the third functional interface circuit further includes: a second filtering element connected in series with the voltage dividing element and the voltage limiting element and configured to perform second-stage filtering on the external input signal experiencing voltage dividing by the voltage dividing element.

Optionally, in the above integrated interface circuit, the third functional interface circuit includes: the first filtering element including a first inductor and a first capacitor, wherein a first end of the first inductor is connected to the external port, a second end of the first inductor is connected to a first end of the capacitor, and a second end of the capacitor is connected to ground; the voltage dividing element including a first resistor and a second resistor, wherein a first end of the first resistor is connected to the second end of the first inductor, a second end of the first resistor is connected to a first end of the second resistor, and a second end of the second resistor is connected to ground; the second filtering element including a second capacitor, wherein a first end of the second capacitor is connected to the second end of the first resistor, and a second end of the second capacitor is connected to ground; and the voltage limiting element including a first diode, wherein a first end of the first diode is connected to the first end of the second capacitor, a second end of the first diode is connected to a first reference power supply, and a first port of the processor is connected to the first end of the first diode.

Optionally, in the above integrated interface circuit, the second functional interface circuit includes: the third capacitor, wherein the first end of the third capacitor is connected to the external port, and the second end of the third capacitor is connected to the first end of the sixth resistor; a third resistor, wherein a first end of the third resistor is connected to a second reference power supply, and a second end of the third resistor is connected to the external port; a first triode, wherein a collector of the first triode is connected to the second end of the third resistor, a base of the first triode is connected to the second end of the sixth resistor, and an emitter of the first triode is connected to a first end of a fourth resistor; the fourth resistor, wherein a second end of the fourth resistor is connected to the second end of the third capacitor and to ground; the sixth resistor; and the tenth resistor, wherein the first end of the tenth resistor is connected to the base of the first triode, and the second end of the tenth resistor is connected to the second port of the processor.

Optionally, in the above integrated interface circuit, the second functional interface circuit includes: the third capacitor, wherein the first end of the third capacitor is connected to the external port, and the second end of the third capacitor is connected to the first end of the sixth resistor; the fifth resistor, wherein the first end of the fifth resistor is connected to the external port, and the second end of the fifth resistor is connected to the second end of the sixth resistor; the sixth resistor; a seventh resistor, wherein a first end of the seventh resistor is connected to a third reference power supply, and a second end of the seventh resistor is connected to an emitter of a second triode; an eighth resistor, wherein a first end of the eighth resistor is connected to the third reference power supply, and a second end of the eighth resistor is connected to a base of the second triode; the second triode, wherein a collector of the second triode is connected to the second end of the sixth resistor; a third triode, wherein a collector of the third triode is connected to the base of the second triode, a base of the third triode is connected to a first end of a ninth resistor, and an emitter of the third triode is connected to ground; and the ninth resistor, wherein a second end of the ninth resistor is connected to the second end of the sixth resistor, and the second end of the ninth resistor is further connected to the second port of the processor.

Optionally, the above integrated interface circuit further includes: a selector configured to select a corresponding functional interface circuit from the plurality of functional interface circuits according to a control signal.

According to another aspect of the present invention, there is provided a method for manufacturing an interface circuit, the method including: determining a function corresponding to the interface circuit; and selecting, based on the determined function and from the above integrated interface circuit, a corresponding functional interface circuit for filling.

According to yet another aspect of the present invention, there is provided an electronic control unit including the integrated interface circuit as described above.

According to yet another aspect of the present invention, there is provided a vehicle including the electronic control unit described above.

According to yet another aspect of the present invention, there is provided a computer storage medium including instructions, wherein, when the instructions are run, the method as described above is performed.

The integrated interface circuit of the present invention includes a plurality of functional interface circuits which are connected between an external port and a processor and respectively correspond to different functions. In this manner, a single external port may correspond to the plurality of functional interface circuits. That is, through adaptation of the plurality of functional interface circuits, the single external port may obtain a plurality of functions (integrated functions) provided by the functional interface circuits or the processor, such that limited port resources are advantageously saved (i.e., there are more port resources to meet customized requirements). In addition, there may be at least partially overlapping circuit elements between different functional interface circuits, which makes the overall integrated interface circuit more simplified and reduces manufacturing costs.

### Brief Description of the Drawings

The above and other objects and advantages of the present invention will be more complete and clearer from the following detailed description in conjunction with the accompanying drawings, wherein the same or similar elements are denoted by the same reference numerals.
FIG. 1 is a schematic diagram of an integrated interface circuit according to an embodiment of the present invention;
FIG. 2 is a schematic structural diagram of a third functional interface circuit according to an embodiment of the present invention;
FIG. 3 is a schematic structural diagram of a first functional interface circuit according to an embodiment of the present invention;
FIG. 4 is a schematic structural diagram of a second functional interface circuit according to an embodiment of the present invention;
FIG. 5 is a schematic structural diagram of a second functional interface circuit according to another embodiment of the present invention;
FIG. 6 is a schematic structural diagram of an integrated interface circuit according to an embodiment of the present invention; and
FIG. 7 is a schematic diagram of a method for manufacturing an interface circuit according to an embodiment of the present invention.

### Detailed Description of the Embodiments

It should be understood that the term "vehicle" or another similar term used herein includes various motor vehicles and non-motor vehicles, such as passenger vehicles (including sport utility vehicles, buses, trucks, etc.), various commercial vehicles, ships, aircraft, motorcycles, and bicycles, and includes hybrid vehicles, electric vehicles, etc. A hybrid vehicle is a vehicle with two or more power sources, such as a vehicle powered by a gasoline engine and an electric motor.

Although exemplary embodiments are described as using a plurality of units to perform exemplary processes, it should be understood that these exemplary processes may also be performed by one or more modules.

Moreover, control logic of the disclosure may be included on a computer-readable medium as executable program instructions, which are implemented by a processor or the like. Examples of the computer-readable medium include, but are not limited to, a ROM, a RAM, an optical disc, a magnetic tape, a floppy disk, a flash drive, a smart card, and an optical data storage apparatus. A computer-readable recording medium may also be distributed in a computer system connected to a network, so that the computer-readable medium is stored and implemented in a distributed manner, for example, through a vehicle telematics service or a controller area network (CAN).

Unless specifically mentioned or obvious from context, as used herein, the term "approximately" is understood to be within a range of normal tolerance in the art, for example, within two standard deviations of a mean.

An integrated interface circuit according to various exemplary embodiments of the present invention will be described below in detail with reference to the accompanying drawings.

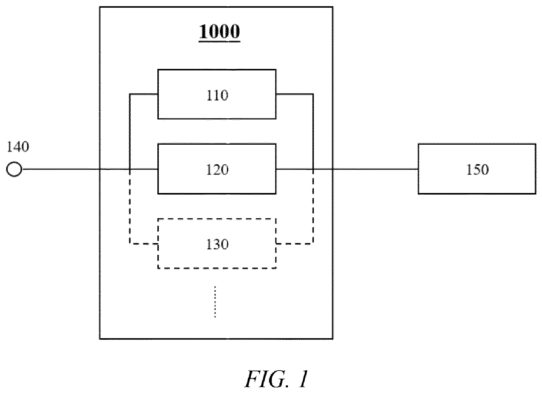

FIG. 1 is a schematic diagram of an integrated interface circuit 1000 according to an embodiment of the present invention. As shown in FIG. 1, the integrated interface circuit 1000 includes a plurality of functional interface circuits which are connected between an external port 140 and a processor 150 and respectively correspond to different functions. The plurality of functional interface circuits include a first functional interface circuit 110 corresponding to a first function and a second functional interface circuit 120 corresponding to a second function, and circuit elements in the second functional interface circuit 120 at least partially overlap circuit elements in the first functional interface circuit 110.

In the context of the present invention, the term "interface circuit" represents a logic circuit that serves as a link between an external device/external port and an internal processor and is a bridge for information exchange between the processor and the external device. Functions of the interface circuit include, but are not limited to, level connection, impedance matching, signal processing or "maintenance", electrostatic protection, alternating current/direct current isolation, etc.

According to different corresponding functions, the interface circuit can be further subdivided into different functional interface circuits, namely, a first functional interface circuit, a second functional interface circuit, etc. As an example, the interface circuit is classified according to different functions implemented by the interface circuit. As another example, the interface circuit is classified according to different ports matching the processor. As yet another example, according to both functions implemented by the interface circuit and functions implemented by the processor, the interface circuit is classified by different adapted or implemented functions.

In the context of the present invention, the term "external port" refers to a port connected to an external device, which may be an external input port for receiving an external input signal, or an external output interface for transmitting a signal to the outside. The "processor" may be any unit that performs a processing function, such as a single-chip microcomputer. Those skilled in the art can appreciate that the processor may provide a plurality of functions, such as various functions of signal processing and analogue-to-digital conversion. In addition, the processor may have a plurality of ports, and the different ports each have a certain specification requirement for an input or output signal. When the integrated interface circuit 1000 is applied in an electronic control unit (ECU), the external port 140 may be a port through which the ECU is connected to the outside, and the processor 150 may be a microprocessor of the ECU.

The integrated interface circuit 1000 includes the plurality of functional interface circuits respectively corresponding to different functions, such as the first functional interface circuit 110 and the second functional interface circuit 120. In this manner, the external port 140 may correspond to the plurality of functional interface circuits. That is, through (adaptation of) the plurality of functional interface circuits, the external port 140 may obtain a plurality of integrated functions, such that limited port resources are advantageously saved. In other words, arranging the integrated interface circuit 1000 in the electronic control unit (ECU) may enable the electronic control unit (ECU) to have more port resources to meet customized requirements. In addition, the circuit elements in the second functional interface circuit 120 at least partially overlap the circuit elements in the first functional interface circuit 110, which makes the overall integrated interface circuit 1000 more simplified and reduces manufacturing costs.

In some embodiments, with continued reference to FIG. 1, in the above integrated interface circuit 1000, the plurality of functional interface circuits may further include a third functional interface circuit 130 (shown with dashed lines) for implementing a third function. Circuit elements in the third functional interface circuit 130 do not overlap the circuit elements in either the first functional interface circuit 110 or the second functional interface circuit 120. Those skilled in the art can appreciate that more or fewer functional interface circuits may be arranged in the integrated interface circuit 1000 as needed, and these functional interface circuits may at least partially overlap the first functional interface circuit 110, the second functional interface circuit 120, and the third functional interface circuit 130, or may not overlap any of the above.

In one embodiment, the third functional interface circuit 130 corresponds to an analogue-to-digital conversion (ADC) input port of the processor 150. The third functional interface circuit 130 may include a first filtering element, a voltage dividing element, and a voltage limiting element. The first filtering element is configured to filter an external input signal received from the external port; the voltage dividing element is configured to be connected in series with the first filtering element, and is configured to reduce a voltage of the external input signal filtered by the first filtering element; and one end of the voltage limiting element is connected in series with the voltage dividing element, the other end of the voltage limiting element is connected in series with a corresponding terminal of the processor, and the voltage limiting element is configured to limit a voltage output to the corresponding terminal of the processor. In some embodiments, the third functional interface circuit may further include: a second filtering element connected in series with the voltage dividing element and the voltage limiting element and configured to perform second-stage filtering on the external input signal experiencing voltage dividing by the voltage dividing element.

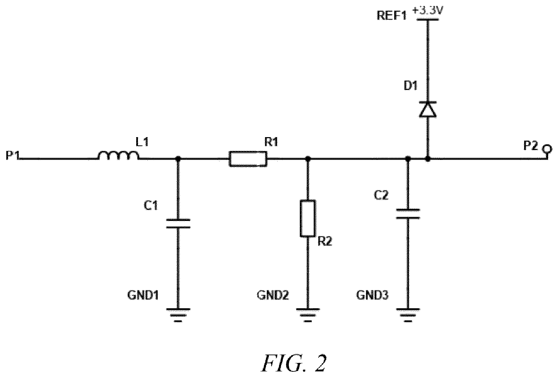

FIG. 2 is a schematic structural diagram of the third functional interface circuit 130 configured to be adapted to the ADC input port of the processor 150. As shown in FIG. 2, the third functional interface circuit 130 includes: the first filtering element composed of a first inductor L1 and a first capacitor C1, the voltage dividing element composed of a first resistor R1 and a second resistor R2, the second filtering element composed of a second capacitor C2, and the voltage limiting element composed of a first diode D1. Certainly, those skilled in the art can appreciate that the filtering elements, the voltage dividing element, and the voltage limiting element described above may include more circuit elements according to actual needs, and are not limited to the specific circuit in FIG. 2.

With continued reference to FIG. 2, a first end of the first inductor L1 is connected to an external port P1, a second end of the first inductor L1 is connected to a first end of the first capacitor C1, a second end of the first capacitor C1 is connected to ground GND1, a first end of the first resistor R1 is connected to the second end of the first inductor L1, a second end of the first resistor R1 is connected to a first end of the second resistor R2, a second end of the second resistor R2 is connected to ground GND2, a first end of the second capacitor C2 is connected to the second end of the first resistor R1, a second end of the second capacitor C2 is connected to ground GND3, a first end of the first diode D1 is connected to the first end of the second capacitor C2, a second end of the first diode D1 is connected to a first reference power supply REF1, and a port P2 (i.e., the ADC input port) of the processor is connected to the first end of the first diode D1.

Through the functional interface circuit as shown in FIG. 2, the first inductor L1 and the first capacitor C1 constitute an LC filtering element (i.e., the first filtering element). After filtering through the first inductor L1 and the first capacitor C1, a smooth direct current may be obtained, reducing a ripple voltage. Moreover, this filtering may also achieve a good filtering effect when a current fluctuates with changes. The voltage dividing element composed of the first resistor R1 and the second resistor R2 can reduce a voltage of an external input signal experiencing the LC filtering. Appropriate resistance values of the first resistor R1 and the second resistor R2 may be set as needed, such that a desired output voltage at the port P2 may be obtained. In addition, the second filtering element composed of C2 is configured to perform capacitance filtering (i.e., secondary filtering) on a signal output to the port P2, such that clutter interference may be further reduced. In addition, since a voltage of the first reference power supply is 3.3 V and a turn-on voltage of the first diode D1 is 0.7 V, a voltage of the port P2 is clamped below 4 V. Those skilled in the art can appreciate that setting the voltage of the first reference power supply at different values enables the voltage of the port P2 to be clamped below corresponding different voltage values.

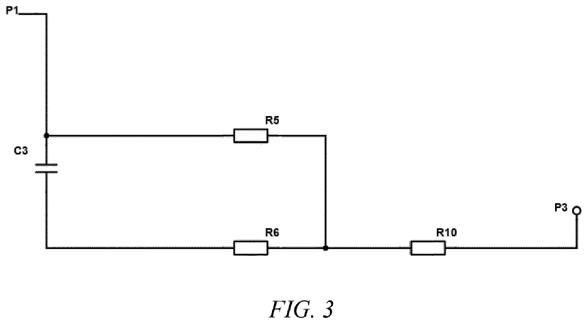

In one embodiment, the first functional interface circuit 110 is configured to be adapted to an input port of the processor 150. FIG. 3 is a schematic structural diagram of the first functional interface circuit 110 which is adapted to the input port. As shown in FIG. 3, the first functional interface circuit 110 includes a third capacitor C3, a fifth resistor R5, a sixth resistor R6, and a tenth resistor R10. A first end of the third capacitor C3 is connected to the external port P1, a second end of the third capacitor C3 is connected to a first end of the sixth resistor R6, a first end of the fifth resistor R5 is connected to the external port P1, a second end of the fifth resistor R5 is connected to a second end of the sixth resistor R6, a first end of the tenth resistor R10 is connected to the second end of the fifth resistor R5, and a second end of the tenth resistor R10 is connected to a second port P3 (e.g., a general-purpose input/output (GPIO) interface) of the processor. The first functional interface circuit 110 shown in FIG. 3 can function readily in current limiting by reasonably setting capacitance and resistance values of each circuit element. For example, when an input at the P1 port is a low-frequency signal (e.g., a direct current signal), due to the presence of the third capacitor C3, a direct current does not flow through a branch formed by the third capacitor C3 and the sixth resistor R6, but only flows through the fifth resistor R5 and the tenth resistor R10. Assuming that the fifth resistor has a high resistance, the current output to the port P3 is readily limited.

The second functional interface circuit 120 is configured to implement a function of "reverse output" and to be adapted to an output port of the processor 150.

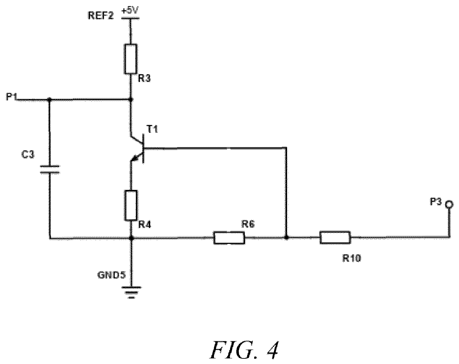

FIG. 4 is a schematic structural diagram of the second functional interface circuit 120. As shown in FIG. 4, the second functional interface circuit 120 includes the third capacitor C3, a third resistor R3, a first triode T1, a fourth resistor R4, the sixth resistor R6, and the tenth resistor R10. The first end of the third capacitor C3 is connected to the external port P1, the second end of the third capacitor C3 is connected to the first end of the sixth resistor R6, a first end of the third resistor R3 is connected to a second reference power supply REF2, a second end of the third resistor R3 is connected to the external port P1, a collector of the first triode T1 is connected to the second end of the third resistor R3, a base of the first triode T1 is connected to the second end of the sixth resistor R6, an emitter of the first triode T1 is connected to a first end of the fourth resistor R4, a second end of the fourth resistor R4 is connected to the second end of the third capacitor C3 and to ground GND5, the first end of the tenth resistor R10 is connected to the base of the first triode T1, and the second end of the tenth resistor R10 is connected to the second port P3 (e.g., the general-purpose input/output (GPIO) interface) of the processor.

Through the circuit in FIG. 4, a level of the external port P1 will vary reversely with a level of the output port P3 of the processor. That is, when the port P3 is at a high level, the external port P1 presents a low level, and when the port P3 is at a low level, the external port P1 presents a high level. For example, when the port P3 is at a low level, the first triode T1 is turned off, and a voltage at the P1 port is approximately equal to the second reference voltage REF2 (i.e., about 5 V), and is thus at a high level. When the port P3 is at a high level, the first triode T1 is turned on, the fourth resistor R4 is connected in parallel to the sixth resistor R6, and an equivalent resistance value thereof is not comparable with those of the third resistor R3 and the tenth resistor R10. Therefore, a voltage divided on the external port P1 is very low (i.e., at a low level).

The circuit elements in the second functional interface circuit shown in FIG. 4 partially overlap the circuit elements in the first functional interface circuit shown in FIG. 3. The overlapping elements include the third capacitor C3, the sixth resistor R6, and the tenth resistor R10.

The second functional interface circuit 120 is configured to implement a function of "forward output" and to be adapted to the output port of the processor 150.

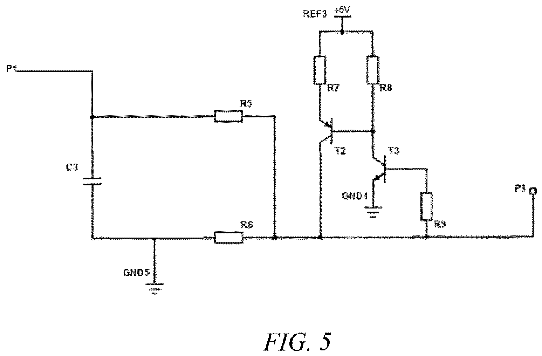

FIG. 5 is another schematic structural diagram of the second functional interface circuit 120. As shown in FIG. 5, the second functional interface circuit 120 includes the third capacitor C3, the fifth resistor R5, the sixth resistor R6, a seventh resistor R7, an eighth resistor R8, a second triode T2, a third triode T3, and a ninth resistor R9. The first end of the third capacitor C3 is connected to the external port P1, the second end of the third capacitor C3 is connected to the first end of the sixth resistor R6 and to the ground GND5, the first end of the fifth resistor R5 is connected to the external port P1, the second end of the fifth resistor R5 is connected to the second end of the sixth resistor R6, a first end of the seventh resistor R7 is connected to a third reference power supply REF3, a second end of the seventh resistor R7 is connected to an emitter of the second triode T2, a first end of the eighth resistor R8 is connected to the third reference power supply REF3, a second end of the eighth resistor R8 is connected to a base of the second triode T2, a collector of the second triode T2 is connected to the second end of the sixth resistor R6, a collector of the third triode T3 is connected to the base of the second triode T2, a base of the third triode T3 is connected to a first end of the ninth resistor R9, an emitter of the third triode T3 is connected to ground GND4, a second end of the ninth resistor R9 is connected to the second end of the sixth resistor R6, and the second end of the ninth resistor R9 is further connected to the second port P3 (e.g., the general-purpose input/output (GPIO) interface) of the processor.

Through the circuit in FIG. 5, the level of the external port P1 will vary in the same way as the level of the output port P3 of the processor. That is, when the port P3 is at a high level, the external port P1 presents a high level, and when the port P3 is at a low level, the external port P1 presents a low level. For example, when the port P3 is at a low level, the second triode T2 and the third triode T3 are turned off, and the voltage at the P1 port is approximately equal to a voltage at the P3 port, and is thus at a low level. When the port P3 is at a high level, the second triode T2 and the third triode T3 are turned on, and the voltage at the external port P1 is approximately equal to the voltage at the port P3 (i.e., at a high level).

The circuit elements in the second functional interface circuit shown in FIG. 5 partially overlap the circuit elements in the first functional interface circuit shown in FIG. 3. The overlapping elements include the third capacitor C3, the fifth resistor R5, and the sixth resistor R6.

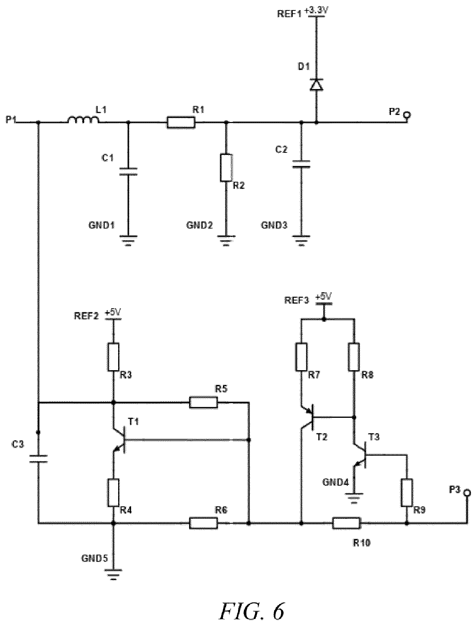

FIG. 6 is a schematic structural diagram of an integrated interface circuit according to one embodiment of the present invention. The integrated interface circuit includes the third functional interface circuit 130 shown in FIG. 2, the first functional interface circuit 110 shown in FIG. 3, and the second functional interface circuit 120 shown in FIGs 4 and 5. The integrated interface circuit includes a plurality of functional interface circuits respectively corresponding to different functions, such as the first functional interface circuit 110, the second functional interface circuit 120, and the third functional interface circuit 130. In this manner, the external port P1 may correspond to the plurality of functional interface circuits. That is, through (adaptation of) the plurality of functional interface circuits, the external port P1 may obtain a plurality of integrated functions, such that limited port resources are advantageously saved. In addition, the integrated interface circuit multiplexes circuit elements in different functional interface circuits, which makes the overall integrated interface circuit more simplified and reduces manufacturing costs.

Although not shown in FIG. 6, in some embodiments, the above integrated interface circuit may further include a selector configured to select a corresponding functional interface circuit from the plurality of functional interface circuits according to a control signal.

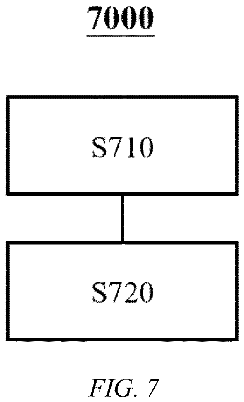

FIG. 7 is a schematic diagram of a method 7000 for manufacturing an interface circuit according to one embodiment of the present invention. As shown in FIG. 7, the method 7000 for manufacturing an interface circuit includes the steps as follows:
in step S710, determining a function corresponding to the interface circuit; and
in step S720, selecting, based on the determined function and from the above integrated interface circuit, a corresponding functional interface circuit for filling.

In some embodiments, determining the function corresponding to the interface circuit in step S710 may be implemented by receiving an external control signal. Further, after the function is determined, the corresponding functional interface circuit is selected for filling. For example, when it is determined that the interface circuit corresponds to an ADC function, the circuit elements (i.e., the first inductor L1, the first resistor R1, the first diode D1, the first capacitor C1, the second resistor R2, and the second capacitor C2 that are shown in FIG. 2) of the third functional interface circuit are selected for filling.

The integrated interface circuit may be located in an electronic control unit (ECU) as an example. The so-called "electronic control unit", also referred to as a "trip computer", a "vehicle-mounted computer", etc., is a vehicle-dedicated microcomputer controller in terms of use. When the integrated interface circuit is applied in the electronic control unit (ECU), the external port may be a port through which the ECU is connected to the outside, and the processor may be a microprocessor of the ECU. The integrated interface circuit includes a plurality of functional interface circuits respectively corresponding to different functions, such as the first functional interface circuit and the second functional interface circuit. In this manner, the external port may correspond to the plurality of functional interface circuits. That is, through (adaptation of) the plurality of functional interface circuits, the external port may obtain a plurality of integrated functions, such that limited port resources are advantageously saved. In other words, arranging the integrated interface circuit 1000 in the electronic control unit (ECU) may enable the electronic control unit (ECU) to have more port resources to meet customized requirements.

The above examples mainly illustrate the integrated interface circuit of the present invention. For example, the reference power supplies are set to different voltage values according to actual needs. Therefore, the presented examples and implementations are considered to be schematic rather than restrictive, and without departing from the scope of the present invention that are defined by the claims; the present invention may cover various changes and replacements.

## Claims

1. Integrated interface circuit,comprising:
a plurality of functional interface circuits which are connected between a port external to the integrated interface circuit and a processor internal to the integrated interface circuit and respectively correspond to different functions,
wherein the plurality of functional interface circuits comprise
a first functional interface circuit corresponding to a first function and
a second functional interface circuit corresponding to a second function, and
circuit elements in the second functional interface circuit at least partially overlap circuit elements in the first functional interface circuit;
the integrated interface circuit **characterized in that**:
the first functional interface circuit comprises:
a third capacitor,
wherein a first end of the third capacitor is connected to the external port, and
a second end of the third capacitor is connected to a first end of a sixth resistor;
a fifth resistor,
wherein a first end of the fifth resistor is connected to the port external to the integrated interface circuit, and
a second end of the fifth resistor is connected to a second end of the sixth resistor;
the sixth resistor; and
a tenth resistor,
wherein a first end of the tenth resistor is connected to the second end of the fifth resistor, and
a second end of the tenth resistor is connected to a second port of the processor, and
the elements in the second functional interface circuit that overlap those in the first functional interface circuit comprise the third capacitor, the sixth resistor, and the tenth resistor.

2. Integrated interface circuit according to Claim 1, wherein the plurality of functional interface circuits further comprise a third functional interface circuit corresponding to a third function, wherein circuit elements in the third functional interface circuit do not overlap the circuit elements in either the first functional interface circuit or the second functional interface circuit.

3. Integrated interface circuit according to Claim 1, wherein the external port is an external input port for receiving an external input signal, or an external output interface for transmitting a signal to the outside.

4. Integrated interface circuit according to Claim 1, wherein the processor is a single-chip microcomputer.

5. Integrated interface circuit according to Claim 2, wherein the third functional interface circuit comprises:
a first filtering element configured to filter an external input signal received from the external port;
a voltage dividing element connected in series with the first filtering element and configured to reduce a voltage of the external input signal filtered by the first filtering element; and
a voltage limiting element, wherein one end of the voltage limiting element is connected in series with the voltage dividing element and the other end of the voltage limiting element is connected in series with a corresponding terminal of the processor, and the voltage limiting element is configured to limit a voltage output to the corresponding terminal of the processor.

6. Integrated interface circuit according to Claim 5, wherein the third functional interface circuit further comprises:
a second filtering element connected in series with the voltage dividing element and the voltage limiting element and configured to perform second-stage filtering on the external input signal experiencing voltage dividing by the voltage dividing element.

7. Integrated interface circuit according to Claim 6, wherein the third functional interface circuit comprises:
the first filtering element including a first inductor and a first capacitor, wherein a first end of the first inductor is connected to the external port, a second end of the first inductor is connected to a first end of the capacitor, and a second end of the capacitor is connected to ground;
the voltage dividing element including a first resistor and a second resistor, wherein a first end of the first resistor is connected to the second end of the first inductor, a second end of the first resistor is connected to a first end of the second resistor, and a second end of the second resistor is connected to ground;
the second filtering element including a second capacitor, wherein a first end of the second capacitor is connected to the second end of the first resistor, and a second end of the second capacitor is connected to ground; and
the voltage limiting element including a first diode, wherein a first end of the first diode is connected to the first end of the second capacitor, a second end of the first diode is connected to a first reference power supply, and a first port of the processor is connected to the first end of the first diode.

8. Integrated interface circuit according to Claim 1, wherein the second functional interface circuit comprises:
the third capacitor, wherein the first end of the third capacitor is connected to the external port, and the second end of the third capacitor is connected to the first end of the sixth resistor;
a third resistor, wherein a first end of the third resistor is connected to a second reference power supply, and a second end of the third resistor is connected to the external port;
a first triode,
wherein a collector of the first triode is connected to the second end of the third resistor, a base of the first triode is connected to the second end of the sixth resistor, and an emitter of the first triode is connected to a first end of a fourth resistor;
the fourth resistor, wherein a second end of the fourth resistor is connected to the second end of the third capacitor and to ground;
the sixth resistor; and
the tenth resistor, wherein the first end of the tenth resistor is connected to the base of the first triode, and the second end of the tenth resistor is connected to the second port of the processor.

9. Integrated interface circuit according to Claim 8, wherein the second functional interface circuit further comprises:
the third capacitor,
wherein the first end of the third capacitor is connected to the external port, and
the second end of the third capacitor is connected to the first end of the sixth resistor;
the fifth resistor,
wherein the first end of the fifth resistor is connected to the external port, and
the second end of the fifth resistor is connected to the second end of the sixth resistor;
the sixth resistor;
a seventh resistor,
wherein a first end of the seventh resistor is connected to a third reference power supply, and
a second end of the seventh resistor is connected to an emitter of a second triode;
an eighth resistor,
wherein a first end of the eighth resistor is connected to the third reference power supply, and
a second end of the eighth resistor is connected to a base of the second triode;
the second triode,
wherein a collector of the second triode is connected to the second end of the sixth resistor;
a third triode,
wherein a collector of the third triode is connected to the base of the second triode,
a base of the third triode is connected to a first end of a ninth resistor, and
an emitter of the third triode is connected to ground; and
the ninth resistor,
wherein a second end of the ninth resistor is connected to the second end of the sixth resistor, and
the second end of the ninth resistor is further connected to the second port of the processor.

10. Method for manufacturing an interface circuit, **characterized in that** it includes:
determining a function corresponding to the interface circuit; and
selecting, based on the determined function and from the integrated interface circuit according to any one of Claims 1 to 9, a corresponding functional interface circuit for filling.

11. Electronic control unit, comprising the integrated interface circuit according to any one of Claims 1 to 9.

12. Vehicle, comprising the electronic control unit according to Claim 11.

13. Computer storage medium, **characterized in that** it comprises instructions, wherein, when the instructions are run, the method according to Claim 10 is performed.

## Patentansprüche

1. Integrierte Schnittstellenschaltung, die Folgendes umfasst:
eine Mehrzahl von funktionalen Schnittstellenschaltungen, die zwischen einem Port außerhalb der integrierten Schnittstellenschaltung und einem Prozessor innerhalb der integrierten Schnittstellenschaltung geschaltet sind und jeweils unterschiedlichen Funktionen entsprechen,
wobei die Mehrzahl von funktionalen Schnittstellenschaltungen Folgendes umfasst:
eine erste funktionale Schnittstellenschaltung, die einer ersten Funktion entspricht, und
eine zweite funktionale Schnittstellenschaltung, die einer zweiten Funktion entspricht, und
Schaltungselemente in der zweiten funktionalen Schnittstellenschaltung Schaltungselemente in der ersten funktionalen Schnittstellenschaltung zumindest teilweise überlappen;
wobei die integrierte Schnittstellenschaltung **dadurch gekennzeichnet ist, dass**:
die erste funktionale Schnittstellenschaltung Folgendes umfasst:
einen dritten Kondensator,
wobei ein erstes Ende des dritten Kondensators mit dem externen Port verbunden ist, und
ein zweites Ende des dritten Kondensators mit einem ersten Ende eines sechsten Widerstands verbunden ist;
einen fünften Widerstand,
wobei ein erstes Ende des fünften Widerstands mit dem Port außerhalb der integrierten Schnittstellenschaltung verbunden ist, und
ein zweites Ende des fünften Widerstands mit einem zweiten Ende des sechsten Widerstands verbunden ist;
den sechsten Widerstand; und
einen zehnten Widerstand,
wobei ein erstes Ende des zehnten Widerstands mit dem zweiten Ende des fünften Widerstands verbunden ist, und
ein zweites Ende des zehnten Widerstands mit einem zweiten Port des Prozessors verbunden ist, und
die Elemente in der zweiten funktionalen Schnittstellenschaltung, die sich mit denen in der ersten funktionalen Schnittstellenschaltung überlappen, den dritten Kondensator, den sechsten Widerstand und den zehnten Widerstand umfassen.

2. Integrierte Schnittstellenschaltung nach Anspruch 1, wobei die Mehrzahl von funktionalen Schnittstellenschaltungen ferner eine dritte funktionale Schnittstellenschaltung umfassen, die einer dritten Funktion entspricht, wobei Schaltungselemente in der dritten funktionalen Schnittstellenschaltung die Schaltungselemente weder in der ersten funktionalen Schnittstellenschaltung noch in der zweiten funktionalen Schnittstellenschaltung überlappen.

3. Integrierte Schnittstellenschaltung nach Anspruch 1, wobei der externe Port ein externer Eingangsport zum Empfangen eines externen Eingangssignals oder eine externe Ausgangsschnittstelle zum Übertragen eines Signals nach außen ist.

4. Integrierte Schnittstellenschaltung nach Anspruch 1, wobei der Prozessor ein Einzelchip-Mikrocomputer ist.

5. Integrierte Schnittstellenschaltung nach Anspruch 2, wobei die dritte funktionale Schnittstellenschaltung Folgendes umfasst:
ein erstes Filterelement, das dazu ausgelegt ist, ein externes Eingangssignal zu filtern, das von dem externen Port empfangen wird;
ein Spannungsteilungselement, das mit dem ersten Filterelement in Reihe geschaltet ist und dazu ausgelegt ist, eine Spannung des externen Eingangssignals, das durch das erste Filterelement gefiltert wird, zu reduzieren; und
ein Spannungsbegrenzungselement, wobei ein Ende des Spannungsbegrenzungselements in Reihe mit dem Spannungsteilungselement geschaltet ist und das andere Ende des Spannungsbegrenzungselements in Reihe mit einem entsprechenden Anschluss des Prozessors geschaltet ist, und das Spannungsbegrenzungselement dazu ausgelegt ist, eine Spannungsausgabe an den entsprechenden Anschluss des Prozessors zu begrenzen.

6. Integrierte Schnittstellenschaltung nach Anspruch 5, wobei die dritte funktionale Schnittstellenschaltung ferner Folgendes umfasst:
ein zweites Filterelement, das in Reihe mit dem Spannungsteilungselement und dem Spannungsbegrenzungselement geschaltet ist und dazu ausgelegt ist, eine Zweitstufenfilterung an dem externen Eingangssignal durchzuführen, das eine Spannungsteilung durch das Spannungsteilungselement erfährt.

7. Integrierte Schnittstellenschaltung nach Anspruch 6, wobei die dritte funktionale Schnittstellenschaltung Folgendes umfasst:
wobei das erste Filterelement eine erste Induktivität und einen ersten Kondensator beinhaltet, wobei ein erstes Ende der ersten Induktivität mit dem externen Port verbunden ist, ein zweites Ende der ersten Induktivität mit einem ersten Ende des Kondensators verbunden ist und ein zweites Ende des Kondensators mit Masse verbunden ist;
wobei das Spannungsteilungselement einen ersten Widerstand und einen zweiten Widerstand beinhaltet, wobei ein erstes Ende des ersten Widerstands mit dem zweiten Ende der ersten Induktivität verbunden ist, ein zweites Ende des ersten Widerstands mit einem ersten Ende des zweiten Widerstands verbunden ist und ein zweites Ende des zweiten Widerstands mit Masse verbunden ist;
wobei das zweite Filterelement einen zweiten Kondensator aufweist, wobei ein erstes Ende des zweiten Kondensators mit dem zweiten Ende des ersten Widerstands verbunden ist und ein zweites Ende des zweiten Kondensators mit Masse verbunden ist; und
wobei das Spannungsbegrenzungselement eine erste Diode aufweist, wobei ein erstes Ende der ersten Diode mit dem ersten Ende des zweiten Kondensators verbunden ist, ein zweites Ende der ersten Diode mit einer ersten Referenzleistungsversorgung verbunden ist und ein erster Port des Prozessors mit dem ersten Ende der ersten Diode verbunden ist.

8. Integrierte Schnittstellenschaltung nach Anspruch 1, wobei die zweite funktionale Schnittstellenschaltung Folgendes umfasst:
den dritten Kondensator, wobei das erste Ende des dritten Kondensators mit dem externen Port verbunden ist und das zweite Ende des dritten Kondensators mit dem ersten Ende des sechsten Widerstands verbunden ist;
einen dritten Widerstand, wobei ein erstes Ende des dritten Widerstands mit einer zweiten Referenzleistungsversorgung verbunden ist und ein zweites Ende des dritten Widerstands mit dem externen Port verbunden ist;
eine erste Triode,
wobei ein Kollektor der ersten Triode mit dem zweiten Ende des dritten Widerstands verbunden ist, eine Basis der ersten Triode mit dem zweiten Ende des sechsten Widerstands verbunden ist und ein Emitter der ersten Triode mit einem ersten Ende eines vierten Widerstands verbunden ist;
den vierten Widerstand, wobei ein zweites Ende des vierten Widerstands mit dem zweiten Ende des dritten Kondensators und mit Masse verbunden ist;
den sechsten Widerstand; und
den zehnten Widerstand, wobei das erste Ende des zehnten Widerstands mit der Basis der ersten Triode verbunden ist und das zweite Ende des zehnten Widerstands mit dem zweiten Port des Prozessors verbunden ist.

9. Integrierte Schnittstellenschaltung nach Anspruch 8, wobei die zweite funktionale Schnittstellenschaltung ferner Folgendes umfasst:
den dritten Kondensator,
wobei das erste Ende des dritten Kondensators mit dem externen Port verbunden ist, und
das zweite Ende des dritten Kondensators mit dem ersten Ende des sechsten Widerstands verbunden ist;
den fünften Widerstand,
wobei das erste Ende des fünften Widerstands mit dem externen Port verbunden ist, und
das zweite Ende des fünften Widerstands mit dem zweiten Ende des sechsten Widerstands verbunden ist;
den sechsten Widerstand;
einen siebten Widerstand,
wobei ein erstes Ende des siebten Widerstands mit einer dritten Referenzleistungsversorgung verbunden ist, und
ein zweites Ende des siebten Widerstands mit einem Emitter einer zweiten Triode verbunden ist;
einen achten Widerstand,
wobei ein erstes Ende des achten Widerstands mit der dritten Referenzleistungsversorgung verbunden ist, und
ein zweites Ende des achten Widerstands mit einer Basis der zweiten Triode verbunden ist;
die zweite Triode,
wobei ein Kollektor der zweiten Triode mit dem zweiten Ende des sechsten Widerstands verbunden ist;
eine dritte Triode,
wobei ein Kollektor der dritten Triode mit der Basis der zweiten Triode verbunden ist,
eine Basis der dritten Triode mit einem ersten Ende eines neunten Widerstands verbunden ist, und
ein Emitter der dritten Triode mit Masse verbunden ist; und
den neunten Widerstand,
wobei ein zweites Ende des neunten Widerstands mit dem zweiten Ende des sechsten Widerstands verbunden ist,
und
das zweite Ende des neunten Widerstands ferner mit dem zweiten Port des Prozessors verbunden ist.

10. Verfahren zum Herstellen einer Schnittstellenschaltung, **dadurch gekennzeichnet, dass** es Folgendes beinhaltet:
Bestimmen einer Funktion, die der Schnittstellenschaltung entspricht; und
Auswählen, basierend auf der bestimmten Funktion und aus der integrierten Schnittstellenschaltung nach einem der Ansprüche 1 bis 9, einer entsprechenden funktionalen Schnittstellenschaltung zum Füllen.

11. Elektronische Steuereinheit, die die integrierte Schnittstellenschaltung nach einem der Ansprüche 1 bis 9 umfasst.

12. Fahrzeug, das die elektronische Steuereinheit nach Anspruch 11 umfasst.

13. Computerspeichermedium, **dadurch gekennzeichnet, dass** es Anweisungen umfasst, wobei, wenn die Anweisungen ausgeführt werden, das Verfahren nach Anspruch 10 durchgeführt wird.

## Revendications

1. Circuit d'interface intégré, comprenant :
une pluralité de circuits fonctionnels d'interface connectés entre un port externe au circuit d'interface intégré et un processeur interne au circuit d'interface intégré et correspondant respectivement à des fonctions différentes,
où la pluralité de circuits fonctionnels d'interface comprennent
un premier circuit fonctionnel d'interface correspondant à une première fonction, et
un deuxième circuit fonctionnel d'interface correspondant à une deuxième fonction, et
des éléments de circuit dans le deuxième circuit fonctionnel d'interface recouvrant au moins partiellement des éléments de circuit dans le premier circuit fonctionnel d'interface ;
le circuit d'interface intégré étant **caractérisé en ce que** :
le premier circuit fonctionnel d'interface comporte :
un troisième condensateur,
où une première extrémité du troisième condensateur est connectée au port externe, et
une deuxième extrémité du troisième condensateur est connectée à une première extrémité d'une sixième résistance ;
une cinquième résistance,
où une première extrémité de la cinquième résistance est connectée au port extérieur au circuit d'interface intégré, et
une deuxième extrémité de la cinquième résistance est connectée à une deuxième extrémité de la sixième résistance ;
la sixième résistance ; et
une dixième résistance,
où une première extrémité de la dixième résistance est connectée à la deuxième extrémité de la cinquième résistance, et
une deuxième extrémité de la dixième résistance est connectée à un deuxième port du processeur, et
les éléments du deuxième circuit fonctionnel d'interface qui chevauchent ceux du premier circuit fonctionnel d'interface comprennent le troisième condensateur, la sixième résistance et la dixième résistance.

2. Circuit d'interface intégré selon la revendication 1, dans lequel la pluralité de circuits fonctionnels d'interface comprennent en outre un troisième circuit fonctionnel d'interface correspondant à une troisième fonction, où des éléments de circuit dans le troisième circuit fonctionnel d'interface ne chevauchent pas les éléments de circuit ni dans le premier circuit fonctionnel d'interface, ni dans le deuxième circuit fonctionnel d'interface.

3. Circuit d'interface intégré selon la revendication 1, dans lequel le port externe est un port d'entrée externe pour recevoir un signal d'entrée externe, ou une interface de sortie externe pour transmettre un signal vers l'extérieur.

4. Circuit d'interface intégré selon la revendication 1, dans lequel le processeur est un micro-ordinateur monopuce.

5. Circuit d'interface intégré selon la revendication 2, dans lequel le troisième circuit fonctionnel d'interface comprend :
un premier élément de filtrage configuré pour filtrer un signal d'entrée externe reçu du port externe ;
un élément diviseur de tension connecté en série avec le premier élément de filtrage et configuré pour réduire une tension du signal d'entrée externe filtré par le premier élément de filtrage ; et
un élément limiteur de tension, une extrémité de l'élément limiteur de tension étant connectée en série avec l'élément diviseur de tension et l'autre extrémité de l'élément limiteur de tension étant connectée en série avec une borne correspondante du processeur, et
l'élément limiteur de tension étant configuré pour limiter une sortie de tension à la borne correspondante du processeur.

6. Circuit d'interface intégré selon la revendication 5, dans lequel le troisième circuit fonctionnel d'interface comprend en outre :
un deuxième élément de filtrage connecté en série avec l'élément diviseur de tension et l'élément limiteur de tension, et configuré pour effectuer un filtrage de deuxième étage sur le signal d'entrée externe subissant une division de tension par l'élément diviseur de tension.

7. Circuit d'interface intégré selon la revendication 6, dans lequel le troisième circuit fonctionnel d'interface comprend :
le premier élément de filtrage comportant une première inductance et un premier condensateur, où une première extrémité de la première inductance est connectée au port externe, une deuxième extrémité de la première inductance est connectée à une première extrémité du condensateur, et une deuxième extrémité du condensateur est connectée à la masse ;
l'élément de division de tension comportant une première résistance et une deuxième résistance, une première extrémité de la première résistance étant connectée à la deuxième extrémité de la première inductance, une deuxième extrémité de la première résistance étant connectée à une première extrémité de la deuxième résistance, et une deuxième extrémité de la deuxième résistance étant connectée à la masse ;
le deuxième élément de filtrage comportant un deuxième condensateur, où une première extrémité du deuxième condensateur est connectée à la deuxième extrémité de la première résistance, et une deuxième extrémité du deuxième condensateur est connectée à la masse ; et
l'élément limiteur de tension comprenant une première diode, une première extrémité de la première diode étant connectée à la première extrémité du deuxième condensateur, une deuxième extrémité de la première diode étant connectée à une première alimentation de référence, et un premier port du processeur étant connecté à la première extrémité de la première diode.

8. Circuit d'interface intégré selon la revendication 1, dans lequel le deuxième circuit fonctionnel d'interface comprend :
le troisième condensateur, où la première extrémité du troisième condensateur est connectée au port externe,
et la deuxième extrémité du troisième condensateur est connectée à la première extrémité de la sixième résistance ;
une troisième résistance, où une première extrémité de la troisième résistance est connectée à une deuxième alimentation de référence, et une deuxième extrémité de la troisième résistance est connectée au port externe ;
une première triode,
où un collecteur de la première triode est connecté à la deuxième extrémité de la troisième résistance, une base de la première triode est connectée à la deuxième extrémité de la sixième résistance, et un émetteur de la première triode est connecté à une première extrémité d'une quatrième résistance ;
la quatrième résistance, où une deuxième extrémité de la quatrième résistance est connectée à la deuxième extrémité du troisième condensateur et à la masse ;
la sixième résistance ; et
la dixième résistance, la première extrémité de la dixième résistance étant connectée à la base de la première triode, et la deuxième extrémité de la dixième résistance étant connectée au deuxième port du processeur.

9. Circuit d'interface intégré selon la revendication 8, dans lequel le deuxième circuit fonctionnel d'interface comprend en outre :
le troisième condensateur,
où la première extrémité du troisième condensateur est connectée au port externe, et
la deuxième extrémité du troisième condensateur est connectée à la première extrémité de la sixième résistance ;
la cinquième résistance,
la première extrémité de la cinquième résistance étant connectée au port externe, et
la deuxième extrémité de la cinquième résistance étant connectée à la deuxième extrémité de la sixième résistance ;
la sixième résistance ;
une septième résistance,
où une première extrémité de la septième résistance est connectée à une troisième alimentation de référence, et une deuxième extrémité de la septième résistance est connectée à un émetteur d'une deuxième triode ;
une huitième résistance,
où une première extrémité de la huitième résistance est connectée à la troisième alimentation de référence, et une deuxième extrémité de la huitième résistance est connectée à une base de la deuxième triode ;
la deuxième triode,
où un collecteur de la deuxième triode est connecté à la deuxième extrémité de la sixième résistance ;
une troisième triode,
où un collecteur de la troisième triode est connecté à la base de la deuxième triode,
une base de la troisième triode est connectée à une première extrémité d'une neuvième résistance, et
un émetteur de la troisième triode est connecté à la masse ; et
la neuvième résistance,
où une deuxième extrémité de la neuvième résistance est connectée à la deuxième extrémité de la sixième résistance, et
la deuxième extrémité de la neuvième résistance est en outre connectée au deuxième port du processeur.

10. Procédé de fabrication d'un circuit d'interface,
**caractérisé en ce qu'**il comprend les étapes suivantes :
déterminer une fonction correspondant au circuit d'interface ; et
sélectionner, sur la base de la fonction déterminée et à partir du circuit d'interface intégré selon l'une quelconque des revendications 1 à 9, un circuit fonctionnel d'interface correspondant pour le remplissage.

11. Unité électronique de commande, comprenant le circuit d'interface intégré selon l'une quelconque des revendications 1 à 9.

12. Véhicule, comprenant l'unité électronique de commande selon la revendication 11.

13. Support de stockage informatique, **caractérisé en ce qu'**il comprend des instructions, où, lors de l'exécution des instructions, le procédé selon la revendication 10 est exécuté.
